# EUROPÄISCHE PATENTSCHRIFT

(11) **EP 3 814 264 B1**
(45) Veröffentlichungstag und Bekanntmachung des Hinweises auf die Patenterteilung: **03.08.2022**
(21) Anmeldenummer: 19731240.8
(22) Anmeldetag: 13.06.2019
(51) Int. Cl.: B66B 5/00

(54) **WARTUNGSSCHALTTAFEL UND AUFZUGSTEUERUNG ZUM STEUERN VON VERLAGERUNGSBEWEGUNGEN EINER AUFZUGKABINE**
MAINTENANCE PATCH PANEL AND LIFT CONTROL FOR CONTROLLING DISPLACEMENT MOVEMENTS OF A LIFT CABIN
PANNEAU DE COMMANDE D'ENTRETIEN ET COMMANDE D'ASCENSEUR PERMETTANT DE COMMANDER LES MOUVEMENTS DE DÉPLACEMENT D'UNE CABINE D'ASCENSEUR

(30) Priorität: 27.06.2018 EP 18180092
(43) Veröffentlichungstag der Anmeldung: 05.05.2021
(73) Patentinhaber: Inventio AG, 6052 Hergiswil (CH)
(72) Erfinder: ARNOLD, Daniel, 6462 Seedorf (CH); FREY, David, 6004 Luzern (CH); SAGER, Martin, 6208 Oberkirch LU (CH); BÜRGISSER, Patrick, 6344 Meierskappel (CH)
(74) Vertreter: Inventio AG
(86) Internationale Anmeldenummer: PCT/EP2019/065522
(87) Internationale Veröffentlichungsnummer: WO 2020/001994

(56) Entgegenhaltungen:
- EP-A1- 1 930 278
- EP-A1- 2 033 927
- WO-A1-2011/009715

## Beschreibung

Die vorliegende Erfindung betrifft eine Wartungsschalttafel und eine Aufzugsteuerung zum Steuern von Verlagerungsbewegungen einer Aufzugkabine sowie einen entsprechend ausgestatteten Aufzug.

Im Rahmen beispielsweise einer Wartung eines Aufzugs kann es nötig sein, dass ein Techniker eine Aufzugkabine innerhalb eines Aufzugschachts verfahren kann, während er sich außerhalb der Aufzugkabine, d.h. beispielsweise auf einem Dach der Aufzugkabine, befindet. Hierzu kann außerhalb der Aufzugkabine eine Wartungsschalttafel vorgesehen sein, mithilfe derer der Techniker eine Steuerungseinheit des Aufzugs direkt dazu anweisen kann, einen Antrieb des Aufzugs derart anzusteuern, dass die Aufzugkabine in eine gewünschte Richtung verfahren wird.

Um hohen Sicherheitsanforderungen genügen zu können, sind hierbei an der Wartungsschalttafel typischerweise drei Taster in Form eines Freigabetasters und zweier Richtungstaster, d.h. eines Abwärtsrichtungtasters und eines Aufwärtsrichtungtasters, vorgesehen. Über den Abwärtsrichtungtaster bzw. den Aufwärtsrichtungtaster kann der Techniker angeben, in welche Richtung die Aufzugkabine verfahren werden soll. Damit die Steuerungseinheit die Aufzugkabine tatsächlich verfährt, muss der Techniker aus Sicherheitsgründen gleichzeitig mit einem der Richtungstaster ergänzend den Freigabetaster drücken.

Die drei Taster sind herkömmlich als einfache Schaltelemente ausgebildet, welche lediglich zwischen einem unbetätigten und einem betätigten Betätigungszustand hin und her geschaltet werden können. Eine Geschwindigkeit, mit der die Aufzugkabine verfahren wird, wenn ein Richtungstaster und der Freigabetaster gedrückt werden, ist im Allgemeinen fest voreingestellt. Gegebenenfalls kann die voreingestellte Geschwindigkeit verändert werden, jedoch nur solange die Aufzugkabine nicht bewegt wird.

Die EP 2 033 927 A1 offenbart eine Wartungsschalttafel nach dem Oberbegriff des Anspruchs 1.

Es wurde nun erkannt, dass ein Verfahren der Aufzugkabine während eines Wartungsvorganges schwierig, zeitraubend und/oder sogar gefährlich sein kann.

Es kann unter anderem ein Bedarf an einer Wartungstafel, einer mit einer solchen Wartungstafel ausgestatteten Aufzugsteuerung und einem mit einer solchen Aufzugsteuerung ausgestatteten Aufzug bestehen, bei denen ein Verfahren der Aufzugkabine einfach, schnell und/oder gefahrlos durchzuführen ist.

Einem solchen Bedarf kann durch den Gegenstand gemäß einem der unabhängigen Ansprüche entsprochen werden. Vorteilhafte Ausführungsformen sind in den abhängigen Ansprüchen definiert sowie in der nachfolgenden Beschreibung erläutert.

Gemäß der Erfindung wird eine Wartungsschalttafel zum Steuern von Verlagerungsbewegungen einer Aufzugkabine vorgeschlagen, wobei die Wartungsschalttafel zumindest drei Taster umfassend einen Freigabetaster, einen Abwärtsrichtungtaster und einen Aufwärtsrichtungtaster aufweist. Jeder der Taster weist dabei jeweils ein in einer Betätigungsrichtung verlagerbares Betätigungselement auf und ist dazu konfiguriert, bei einem Verlagern des Betätigungselements über eine jeweilige Betätigungsposition hinaus von einem unbetätigten in einen betätigten Betätigungszustand überzugehen und ein mit dem jeweiligen Betätigungszustand korrelierendes Betätigungssignal auszugeben. An zumindest einem der Taster ist ein den jeweiligen Taster überwachender Positionssensor vorgesehen, der dazu konfiguriert ist, eine aktuelle Position des Betätigungselements des jeweiligen Tasters zu detektieren und ein mit der detektierten Position korrelierendes Positionssignal auszugeben.

Gemäß einem zweiten Aspekt der Erfindung wird eine Aufzugsteuerung zum Steuern von Verlagerungsbewegungen einer Aufzugkabine einer Aufzuganlage vorgeschlagen. Die Aufzugsteuerung weist eine Steuerungseinheit zum Steuern einer Leistungsversorgung zu einem die Aufzugkabine antreibenden Antriebsmotor und eine Wartungsschalttafel gemäß einer Ausführungsform des ersten Aspekts der Erfindung auf.

Gemäß einem dritten Aspekt der Erfindung wird eine Aufzuganlage mit einer Aufzugsteuerung gemäß einer Ausführungsform des zweiten Aspekts der Erfindung vorgeschlagen.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Wie einleitend angemerkt, werden Wartungsschalttafeln insbesondere beim Warten von Aufzuganlagen eingesetzt, um einem sich beispielsweise auf dem Dach einer Aufzugkabine befindlichen Techniker zu ermöglichen, die Aufzuganlage dazu anzusteuern, die Aufzugkabine innerhalb eines Aufzugschachts zu verlagern. Dazu ist die Wartungsschalttafel außerhalb der Aufzugkabine, beispielsweise auf dem Dach der Aufzugkabine, angeordnet.

Aus Sicherheitsgründen ist die Wartungsschalttafel dabei in eine Sicherheitskette integriert, über die eine Steuereinheit der Aufzuganlage Zustände innerhalb der Aufzuganlage überwacht, sodass ein Verlagern der Aufzugkabine ausschließlich dann zugelassen wird bzw. angesteuert wird, wenn sich die Aufzuganlage in einem diesbezüglich sicheren Zustand befindet. Innerhalb der Sicherheitskette werden beispielsweise Schließzustände von Kabinentüren und Schachttüren überwacht, sodass die Kabine während eines normalen Betriebs der Aufzuganlage nur verfahren werden kann, wenn alle Türen geschlossen sind.

Im normalen Betrieb wird dabei das Verlagern der Aufzugkabine von der Steuereinheit in Reaktion auf Kabinenrufsignale gesteuert, welche beispielsweise von Passagieren durch Betätigen einer Kabinenschalttafel (COP - cabin operation panel) oder einer Stockwerkschalttafel (LOP - landing operation panel) ausgelöst werden können.

Wenn die Aufzuganlage in einen Wartungsmodus versetzt wird, kann das Verlagern der Aufzugkabine stattdessen über Steuersignale gesteuert werden, die von dem Techniker durch Betätigen der Wartungsschalttafel übermittelt werden. Die Integration der Wartungsschalttafel in die Sicherheitskette der Aufzuganlage kann dabei derart ausgestaltet sein, dass sichergestellt ist, dass die Aufzugkabine ausschließlich dann verlagert wird, wenn der Techniker absichtlich zwei der an der Wartungsschalttafel vorgesehenen Taster gleichzeitig bedient.

Allerdings wurde beobachtet, dass es mit herkömmlichen Wartungsschalttafeln, die mit einfachen Tastern ausgestattet sind, einem Techniker schwerfallen kann, die Aufzugkabine in einer gewünschten Weise, insbesondere ausreichend schnell und präzise sowie risikoarm, zu verlagern.

Es wurde insbesondere erkannt, dass dies unter anderem daran liegen kann, dass eine Geschwindigkeit, mit der die Aufzugkabine gesteuert durch die Wartungsschalttafel verlagert wird, im Allgemeinen vor einem Betätigen der Wartungsschalttafel fest eingestellt ist. Allenfalls kann die Verlagerungsgeschwindigkeit verändert werden, solange die Aufzugkabine noch steht, nicht jedoch während einer bereits begonnenen Fahrt. Dies kann zusätzlichen Aufwand und Arbeitskomplexität für den die Wartungsschalttafel nutzenden Techniker bedeuten.

Außerdem wurde beobachtet, dass die Aufzugkabine, wenn sie mithilfe der Wartungsschalttafel gesteuert verlagert wird, dazu neigt, sich ruckartig zu bewegen oder sogar Sprünge zu machen, d.h. sich kurzzeitig über eine Zielposition hinaus zu bewegen und dann zurückzufallen. Es wurde erkannt, dass dies wahrscheinlich darauf zurückzuführen ist, dass mit herkömmlichen Wartungsschalttafeln eine Leistungsversorgung zu einem Antriebsmotor der Aufzugkabine lediglich zwischen zwei Zuständen, d.h. AN oder AUS, geschaltet werden kann. Wenn sich die Aufzugkabine mit erheblicher Geschwindigkeit bewegt, führt ein AUS-Schalten nicht notwendigerweise dazu, dass die Aufzugkabine sofort stehen bleibt. Stattdessen kann sich die Aufzugkabine trotz abgeschaltetem Antriebsmotor aufgrund ihrer Trägheit noch ein Stück weiter bewegen, um dann anschließend zu einer Position, an der der Antriebsmotor abgeschaltet wurde, zurückzufallen. Je nach Verfahrgeschwindigkeit können solche Sprünge bis zu 0,5 m betragen und eine Unannehmlichkeit oder sogar eine Gefahr für den sich auf der Aufzugkabine befindlichen Techniker darstellen.

Um unter anderem die genannten erkannten Defizite herkömmlicher Wartungsschalttafeln auszuräumen, wird vorgeschlagen, zumindest einen der Taster der Wartungsschalttafel mit einem Positionssensor auszustatten. Dieser Positionssensor soll erkennen können, bis zu welcher Position der Taster von dem Techniker aktuell niedergedrückt wird und daraufhin ein mit der detektierten Position korrelierendes Positionssignal ausgeben. Dieses Positionssignal kann dann an die Steuereinheit der Aufzuganlage übermittelt werden, sodass die Steuereinheit die Verfahrgeschwindigkeit der Aufzugkabine abhängig von diesem Positionssignal steuern kann.

Der Techniker kann somit je nachdem, wie weit er den entsprechenden Taster niederdrückt steuern, wie schnell die Aufzugkabine aktuell verfahren werden soll. Ferner kann der Techniker beispielsweise durch ein langsames Loslassen des entsprechenden Tasters bewirken, dass gegen Ende einer Fahrt die Verfahrgeschwindigkeit sukzessive reduziert wird, um ein ruckartiges Stoppen oder gar Springen der Aufzugkabine zu vermeiden.

Nachfolgend werden einige der in dieser Anmeldung verwendeten Begrifflichkeiten näher erläutert.

Die Wartungsschalttafel kann eine Vorrichtung sein, mithilfe derer während eines Wartungsmodus ein Verlagern der Aufzugkabine bewirkt werden kann. Die Wartungsschalttafel kann hierzu direkt mit der Steuereinheit der Aufzuganlage kommunizieren. Insbesondere können in der Wartungsschalttafel erzeugte Betätigungssignale an die Steuereinheit weitergeleitet werden, um diese zu informieren, dass die Aufzugkabine verlagert werden soll und gegebenenfalls in welche Richtung die Aufzugkabine verlagert werden soll. Hierbei sollte die Wartungsschalttafel möglichst einfach aufgebaut und zu bedienen sein. Insbesondere sollte ein Aufbau der Wartungsschalttafel vorzugsweise demjenigen Aufbau entsprechen, den ein Techniker von herkömmlichen Wartungsschalttafeln gewohnt ist. Hierzu sollte die Wartungsschalttafel zumindest drei Taster aufweisen.

Unter einem Taster kann ein Bedienelement verstanden werden, das durch Verlagern eines Betätigungselements in einer Betätigungsrichtung, insbesondere durch Drücken eines Knopfes, betätigt wird und nach dem Loslassen selbsttätig in eine Ausgangslage zurückkehrt. Hierfür wird meist eine mechanische Feder eingesetzt. Das Betätigungselement ist dabei meist linear zu verlagern, d.h. die Betätigungsrichtung ist meist geradlinig. Es sind jedoch auch Taster vorstellbar, bei denen das Betätigungselement nicht linear zu verlagern ist, sondern beispielsweise durch eine Drehbewegung. Sobald das Betätigungselement über eine bestimmte Betätigungsposition hinaus verlagert wird, wechselt der Taster seinen Betätigungszustand. Beispielsweise kann der Taster im unbetätigten Zustand, d.h., wenn das Betätigungselement in einer Ruhelage ist, entweder offen oder geschlossen sein, d.h. eine elektrische Verbindung zwischen einem Tastereingang und einem Tasterausgang kann offen oder geschlossen sein. Beim Übergang in den betätigten Zustand kann der Taster dann schließen bzw. öffnen. Je nach aktuellem Betätigungszustand kann der Taster ein mit dem Betätigungszustand korrelierendes Betätigungssignal ausgeben. Beispielsweise kann der Taster im geschlossenen Zustand eine logische "0" ausgeben und im geöffneten Zustand eine logische "1" ausgeben. Dies kann einfach dadurch geschehen, dass abhängig von dem Betätigungszustand ein durch den Taster verlaufender Schaltkreis geöffnet bzw. geschlossen wird. Alternativ oder ergänzend kann in dem Taster gezielt und in Abhängigkeit von dem Betätigungszustand ein entsprechendes Betätigungssignal generiert werden. Das Betätigungssignal kann dann an einen Signalausgang geleitet und von dort aus beispielsweise an die Steuereinheit der Aufzuganlage übermittelt werden.

Die drei Taster der Wartungsschalttafel umfassen hierbei einen Freigabetaster, einen Abwärtsrichtungtaster und einen Aufwärtsrichtungtaster. Der Freigabetaster muss dabei in jedem Fall von dem Techniker betätigt werden, um ein Verlagern der Aufzugkabine zu autorisieren. Zeitgleich muss dann der Techniker entweder den Abwärtsrichtungtaster oder den Aufwärtsrichtungtaster betätigen, um durch ein von diesem generiertes Betätigungssignal der Steuereinheit zu signalisieren, in welche Richtung die Aufzugkabine verfahren werden soll.

An zumindest einem der Taster ist ein Positionssensor vorgesehen. Mittels dieses Positionssensors ist die aktuelle Position des Betätigungselements zu detektieren. Der Positionssensor kann dabei entweder direkt mit dem Betätigungselement zusammenwirken oder mit einem anderen Element, das an dem Taster vorgesehen ist und in einer eindeutigen räumlichen Beziehung zu dem Betätigungselement steht, zusammenwirken.

Der Positionssensor sollte dabei dazu konfiguriert sein, zumindest zwei der möglichen Positionen des Betätigungselements entlang der Betätigungsrichtung unterscheiden zu können. Vorzugsweise kann der Positionssensor mehrere solcher möglicher Positionen unterscheiden oder die Positionen des Betätigungselements sogar kontinuierlich entlang der Betätigungsrichtung differenzieren können. Der Positionssensor kann, wie weiter unten genauer anhand von Beispielen erläutert, in unterschiedlicher Weise ausgestaltet und angeordnet sein. Der Positionssensor kann dann ein die detektierte Position des Betätigungselements wiedergebendes Positionssignal an einen Signalausgang ausgeben, von wo aus er beispielsweise an die Steuereinheit der Aufzuganlage übermittelt werden kann. Anhand dieses Positionssignals kann die Steuereinheit dann erkennen, wie weit der entsprechende Taster von dem Techniker betätigt wurde und hieraus rückschließen, wie schnell die Aufzugkabine verlagert werden soll. Je weiter das Betätigungselement dabei in der Betätigungsrichtung verlagert wurde, desto schneller soll typischerweise die Aufzugkabine verlagert werden. Eine Abhängigkeit der zu bewirkenden Verfahrgeschwindigkeit von der Position des Betätigungselements kann dabei linear oder in bestimmten Fällen auch nicht-linear sein.

Gemäß einer Ausführungsform weist die Wartungsschalttafel ferner zumindest drei Signalausgänge auf. Jeder der drei Signalausgänge ist dabei geeignet mit einem der Taster verbunden. Ein erster Signalausgang ist zum Ausgeben des mit dem Betätigungszustand des Freigabetasters korrelierenden Betätigungssignals und/oder des eventuell mit der aktuellen Position des Betätigungselements des Freigabetasters korrelierenden Positionssignals konfiguriert. Ein zweiter Signalausgang ist zum Ausgeben des mit dem Betätigungszustand des Abwärtsrichtungtasters korrelierenden Betätigungssignals und/oder des eventuell mit der aktuellen Position des Betätigungselements des Abwärtsrichtungtasters korrelierenden Positionssignals konfiguriert. Ein dritter Signalausgang ist zum Ausgeben des mit dem Betätigungszustand des Aufwärtsrichtungtasters korrelierenden Betätigungssignals und/oder des mit der aktuellen Position des Betätigungselements des Aufwärtsrichtungtasters korrelierenden Positionssignals konfiguriert.

Mit anderen Worten verfügt die Wartungsschalttafel vorzugsweise über zumindest drei Signalausgänge, über die jeweils Betätigungssignale und/oder Positionssignale von einem der Taster ausgegeben werden können. Hierdurch kann eine Verdrahtung der Taster mit den Signalausgängen der Wartungsschalttafel einfach und sicher ausgestaltet werden. Außerdem kann eine Verdrahtung der Schalttafel mit der Steuereinheit der Aufzuganlage einfach und sicher ausgestaltet werden. Die genannten Komponenten müssen jedoch nicht zwingend miteinander festverdrahtet werden. Es kann auch vorgesehen sein, Signale zu oder von einem der Signalausgänge drahtlos zu übermitteln.

Gemäß einer Ausführungsform weist die Wartungsschalttafel ferner einen Sicherheitskettensignaleingang und einen Sicherheitskettensignalausgang auf. Der Abwärtsrichtungtaster und der Aufwärtsrichtungtaster sind hierbei in einer Richtungstastereinheit parallel miteinander verschaltet. Die Richtungstastereinheit und der Freigabetaster sind zwischen dem Sicherheitskettensignaleingang und dem Sicherheitskettensignalausgang in Serie verschaltet.

Anders ausgedrückt können an der Wartungsschalttafel separat zu den oben genannten Signalausgängen oder gegebenenfalls auch gekoppelt mit diesen Signalausgängen Sicherheitskettensignalein- und -ausgänge vorgesehen sein. Über den Sicherheitskettensignaleingang und den Sicherheitskettensignalausgang kann die Wartungsschalttafel in die Sicherheitskette integriert werden, die von der Steuereinheit der Aufzuganlage überwacht wird. Dabei werden die beiden Richtungstaster miteinander parallel verschaltet und dann zusammen mit dem Freigabetaster in Serie verschaltet.

Mit einer solchen Verschaltung kann erreicht werden, dass der Schaltkreis zwischen dem Sicherheitskettensignaleingang und den Sicherheitskettensignalausgang ausschließlich dann geschlossen wird, wenn sowohl der Freigabetaster als auch einer der Richtungstaster gleichzeitig betätigt werden. Durch Überwachen der Sicherheitskette kann somit sichergestellt werden, dass die Steuereinheit ein Verfahren der Aufzugkabine ausschließlich dann veranlasst bzw. zulässt, wenn der Techniker gleichzeitig den Freigabetaster und einen Richtungstaster betätigt.

Gemäß einer Ausführungsform ist jeweils an dem Abwärtsrichtungtaster und dem Aufwärtsrichtungtaster ein Positionssensor vorgesehen.

Mit anderen Worten kann es vorteilhaft sein, die Möglichkeit, die Verfahrgeschwindigkeit der Aufzugkabine über die Wartungsschalttafel steuern zu können, dadurch zu realisieren, dass sowohl an dem Abwärtsrichtungtaster als auch an dem Aufwärtsrichtungtaster jeweils ein Positionssensor vorgesehen ist, der die aktuelle Position des Betätigungselements des jeweiligen Richtungstasters detektieren und ein entsprechendes Positionssignal ausgeben kann. Der Freigabetaster kann in diesem Fall ohne einen Positionssensor ausgebildet sein. Beispielsweise kann der Freigabetaster besonders schwergängig zu betätigen sein, um gewährleisten zu können, dass der Freigabetaster im Allgemeinen nur absichtlich, d.h. nicht versehentlich, betätigt wird. Bei einem derart schwergängigen Freigabetaster wäre es jedoch für einen Techniker schwierig, eine Betätigungsposition graduell einzustellen, da er das Betätigungselement beispielsweise mit verhältnismäßig viel Kraft niederdrücken muss. Die beiden Richtungstaster können in diesem Fall als verhältnismäßig leichtgängig zu betätigende Taster ausgebildet sein, bei denen das Betätigungselement mit wenig Kraft graduell entlang der Betätigungsrichtung verlagert werden kann.

Es ist jedoch auch umgekehrt möglich, lediglich den Freigabetaster mit einem Positionssensor auszustatten. Die beiden Richtungstaster brauchen in diesem Fall nicht mit einem Positionssensor ausgestattet sein. Ein Techniker könnte dann die Verfahrgeschwindigkeit der Aufzugkabine durch Drücken eines der Richtungstaster und gleichzeitiges graduelles Niederdrücken des Betätigungselements des Freigabetasters steuern. Hierbei können beispielsweise der Freigabetaster leichtgängig und die Richtungstaster schwer gängig ausgestaltet sein.

Gemäß einer Ausführungsform kann der Positionssensor dazu konfiguriert sein, eine aktuelle Position des Betätigungselements des jeweiligen Tasters zumindest dann zu detektieren, wenn dieses Betätigungselement ausgehend von einer Ruheposition über die Betätigungsposition hinaus betätigt ist.

Mit anderen Worten kann das Betätigungselement eines Tasters ausgehend von einer als Ruheposition bezeichneten Ausgangslage hin zu einer maximal zu erreichenden Maximalverlagerungsposition betätigt werden. Auf diesem Weg passiert das Betätigungselement irgendwann die Betätigungsposition, an der der Taster von seinem unbetätigten in seinen betätigten Zustand übergeht. Es kann nun von Vorteil sein, den Positionssensor derart auszugestalten, dass er die aktuelle Position des Betätigungselements insbesondere in einem Bereich erfasst, an der das Betätigungselement die Betätigungsposition bereits passiert hat, d.h. in einem Bereich zwischen der Betätigungsposition und der Maximalverlagerungsposition. Erst frühestens ab Erreichen der Betätigungsposition soll die Steuereinheit der Aufzuganlage überhaupt ein Verlagern der Aufzugkabine zulassen bzw. freigeben. Erst wenn das Betätigungselement des entsprechenden Tasters über die Betätigungsposition hinaus verlagert wird, soll es einem Techniker möglich sein, je nachdem, wie weit das Betätigungselement weiter verlagert wird, die Geschwindigkeit, mit der die Aufzugkabine verlagert werden soll, steuern zu können.

Gemäß einer Ausführungsform kann der Positionssensor dazu konfiguriert sein, die aktuelle Position des Betätigungselements des jeweiligen Tasters berührungslos zu detektieren.

Durch die Möglichkeit eines solchen berührungslosen Detektierens der Position des Betätigungselements kann der Taster robust und beispielsweise unempfindlich gegenüber äußeren Einflüssen und/oder Schmutz ausgestaltet werden. Auch Verschleißerscheinungen können minimiert werden.

Insbesondere kann gemäß einer Ausführungsform der von dem Positionssensor zu überwachende Taster ein Magnetelement aufweisen, welches mit dem Betätigungselement derart mechanisch gekoppelt ist, dass es mit der Verlagerung des Betätigungselements bewegt wird. Der Positionssensor kann in diesem Fall einen Hallsensor aufweisen, um das Betätigungssignal abhängig von einer Relativposition zwischen dem Magnetelement und dem Hallsensor auszugeben.

Anders ausgedrückt kann der Positionssensor die aktuelle Position des Betätigungselements des zu überwachenden Tasters detektieren, indem mithilfe eines Hallsensors Änderungen in dem Magnetfeld, das von dem mechanisch mit dem Betätigungselement gekoppelten Magnetelement generiert wird, detektiert werden. Solche Änderungen sind insbesondere abhängig von einer Relativposition zwischen dem Magnetelement und dem Hallsensor. Hierdurch lässt sich eine Möglichkeit einer genauen und robusten Messung der aktuellen Position des Betätigungselements schaffen.

In einer Ausführungsform der Aufzugsteuerung gemäß dem zweiten Aspekt der Erfindung kann die Steuerungseinheit mit der Wartungsschalttafel über einen in der Wartungsschalttafel vorgesehenen Sicherheitskettensignaleingang und einen in der Wartungsschalttafel vorgesehenen Sicherheitskettensignalausgang elektrisch verbunden sein, um einen aktuellen Schaltzustand der Wartungsschalttafel zu überwachen und die Leistungsversorgung zu dem Antriebsmotor zu unterbrechen, wenn der Freigabetaster im unbetätigten Zustand ist oder der Aufwärtsrichtungstaster und der Abwärtsrichtungstaster beide im unbetätigten Zustand sind. Die Steuerungseinheit kann hierbei mit der Wartungsschalttafel über einen in der Wartungsschalttafel vorgesehenen ersten, zweiten, dritten und vierten Signaleingang elektrisch verbunden sein, um die mit aktuellen Betätigungszuständen des Freigabetasters, des Aufwärtsrichtungtasters und des Abwärtsrichtungtasters korrelierenden Betätigungssignale und das mit der detektierten Position korrelierende Positionssignal der Wartungsschalttafel zu überwachen und die Leistungsversorgung zu dem Antriebsmotor einzurichten, wenn der Freigabetaster im betätigten Betätigungszustand ist und zumindest einer des Aufwärtsrichtungstasters und des Abwärtsrichtungstasters im betätigten Betätigungszustand ist und dabei eine Stärke der Leistungsversorgung abhängig von dem Positionssignal zu steuern.

Anders ausgedrückt kann die Steuerungseinheit der Aufzuganlage während eines Wartungsmodus mit der Wartungsschalttafel in einer Weise verbunden sein, die es ermöglicht, den aktuellen Schaltzustand der Wartungsschalttafel als Teil einer durch die Steuerungseinheit zu überwachenden Sicherheitskette zu überwachen. Die Sicherheitskette ist in diesem Fall unterbrochen, sobald zumindest entweder der Freigabetaster oder einer der beiden Richtungstaster unbetätigt sind. In diesem Fall wird aufgrund der unterbrochenen Sicherheitskette eine Leistungsversorgung zu dem Antriebsmotor der Aufzuganordnung unterbrochen, sodass die Aufzugkabine nicht verfahren werden kann.

Ergänzend kann die Steuerungseinheit mit der Wartungsschalttafel in einer Weise verbunden sein, die es ermöglicht, die Betätigungs- und Positionssignale aus der Wartungsschalttafel auszulesen. Aufgrund dieser Betätigungs- und Positionssignale kann die Steuerungseinheit entscheiden, ob eine Leistungsversorgung zu dem Antriebsmotor eingerichtet werden soll. Falls die Betätigungssignale angeben, dass der Freigabetaster sowie einer der Richtungstaster gleichzeitig betätigt sind, soll die Leistungsversorgung zu dem Antriebsmotor etabliert werden. In diesem Fall soll eine Stärke der Leistungsversorgung abhängig von dem Positionssignal gesteuert werden, d.h., je nachdem, wie weit der mit dem Positionssensor ausgestattete Taster aktuell betätigt wird, soll der Antriebsmotor mit mehr oder weniger Leistung versorgt werden.

Gemäß einer Ausführungsform kann dabei die Steuerungseinheit ferner dazu konfiguriert sein, eine Bremse an der Aufzugkabine zu steuern. Die Steuerungseinheit kann hierbei mit der Wartungsschalttafel über den Sicherheitskettensignaleingang und den Sicherheitskettensignalausgang elektrisch verbunden sein, um einen aktuellen Schaltzustand der Wartungsschalttafel zu überwachen und die Bremse an der Aufzugkabine zu aktivieren, wenn der Freigabetaster im unbetätigten Zustand ist oder der Aufwärtsrichtungstaster und der Abwärtsrichtungstaster beide im unbetätigten Zustand sind.

Mit anderen Worten kann die Wartungsschalttafel von der Steuerungseinheit als Teil einer Sicherheitskette überwacht werden und die Steuerungseinheit kann die an der Aufzugkabine vorgesehene Bremse, beispielsweise eine Notbremse, aktivieren, wenn zum Beispiel während eines Wartungsmodus erkannt wird, dass nicht sowohl der Freigabetaster als auch einer der Richtungstaster betätigt sind sondern zumindest der Freigabetaster nicht betätigt ist oder zumindest beide Richtungstaster gleichzeitig nicht betätigt sind. Die Steuerungseinheit kann somit ergänzend zu dem Unterbrechen der Leistungsversorgung durch Aktivieren der Bremse sicherstellen, dass die Aufzugkabine nicht bewegt wird, solange dies nicht durch die Wartungsschalttafel durch gleichzeitiges Betätigen der entsprechend hierfür notwendigen zwei Taster autorisiert wird.

Gemäß einer konkreten Ausführungsform kann hierbei entlang eines Betätigungsweges eines Tasters eine Aktivierungsschwellenposition zwischen der Betätigungsposition und einer Maximalverlagerungsposition angeordnet sein. Die Steuereinheit kann dann dazu konfiguriert sein, die Leistungsversorgung zu dem Antriebsmotor frühestens einzurichten, wenn das Positionssignal des mit dem Positionssensor ausgestatteten Tasters angibt, dass das Betätigungselement des Tasters von der Ruheposition kommend über die Aktivierungsschwellenposition hinaus verlagert wurde.

Anders ausgedrückt kann ein Betätigungsweg, entlang dessen bei einem mit einem Positionssensor ausgestatteten Taster das Betätigungselement beim Betätigen verlagert werden kann, in verschiedene Segmente unterteilt werden. Ein erstes Segment kann dabei von der Ruheposition bis zur Betätigungsposition, ab der der Taster seinen Betätigungszustand ändert, reichen. Ein zweites Segment kann von der Betätigungsposition bis zu der Maximalverlagerungsposition, bis zu der das Betätigungselement maximal verlagert werden kann, reichen. Innerhalb dieses zweiten Segments kann jenseits der Betätigungsposition die Aktivierungsschwellenposition angenommen werden.

Wenn der Taster betätigt wird, erreicht das Betätigungselement zunächst die Betätigungsposition, was durch das hiermit korrelierende Positionssignal angegeben wird. Wenn der Taster dann weiter betätigt wird, d.h. ein Knopf beispielsweise tiefer eingedrückt wird, erreicht das Betätigungselement früher oder später die Aktivierungsschwellenposition, was wiederum durch das hiermit korrelierende Positionssignal angegeben wird.

Erst wenn diese Aktivierungsschwellenposition erreicht wird, soll die Steuereinheit die Leistungsversorgung zu dem Antriebsmotor einrichten. Da die Aktivierungsschwellenposition und die Betätigungsposition entlang des Betätigungsweges des Tasters voneinander beabstandet sind, kann auf diese Weise erreicht werden, dass die Steuereinheit ab dem Zeitpunkt, bei dem das Betätigungselement die Betätigungsposition erreicht, zwar die Leistungsversorgung zu dem Antriebsmotor nicht mehr gezielt unterbricht und insbesondere die Bremse an der Kabine löst, dass eine Leistungsversorgung zu dem Antriebsmotor jedoch tatsächlich erst eingerichtet wird, wenn der Taster noch stärker betätigt wird und somit das Betätigungselement bis über die Aktivierungsschwellenposition hinaus verlagert wird. Hierdurch kann, gesteuert durch geeignetes Betätigen der Wartungsschalttafel, ein gezieltes und sanftes Anfahren der Aufzugkabine ermöglicht werden.

Gemäß einer weiteren Ausführungsform kann die Steuereinheit dazu konfiguriert sein, die Bremse an der Aufzugkabine frühestens zu aktivieren, wenn das Positionssignal des mit dem Positionssensor ausgestatteten Tasters angibt, dass das Betätigungselement des Tasters von der Maximalverlagerungsposition kommend über die Aktivierungsschwellenposition hinaus verlagert wurde.

Während die vorangehend erläuterte Ausführungsform auf ein gezieltes Anfahren am Beginn einer Verlagerung der Aufzugkabine abzielte, kann bei dieser weiteren Ausführungsform das Anhalten nach einer Verlagerung der Aufzugkabine beeinflusst werden. Wenn am Ende eines Verlagerungsvorgangs das Betätigungselement des Tasters sukzessive wieder gelöst wird, kann die Leistungsversorgung an den Antriebsmotor dem sich ändernden Positionssignal entsprechend sukzessive reduziert werden. Dementsprechend wird die Aufzugkabine immer langsamer verlagert. Bei Erreichen der Aktivierungsschwellenposition kann die Leistungsversorgung komplett reduziert sein, sodass die Aufzugkabine zum Stehen kommt. Erst nachdem dann das Betätigungselement des Tasters über die Aktivierungsschwellenposition hinaus hin zur Ruheposition zurück verlagert wird, aktiviert die Steuereinheit die Bremse an der Aufzugkabine. Hierdurch kann erreicht werden, dass die Bremse nicht bei sich noch bewegender Aufzugkabine aktiviert wird und somit einen harten Ruck auf die Aufzugkabine bewirkt.

Es wird daraufhingewiesen, dass einige der möglichen Merkmale und Vorteile der Erfindung hierin mit Bezug auf unterschiedliche Ausführungsformen der Wartungsschalttafel einerseits und der damit ausgestatteten Aufzugsteuerung bzw. der damit ausgestatteten Aufzuganlage beschrieben sind. Ein Fachmann erkennt, dass die Merkmale in geeigneter Weise kombiniert, übertragen, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.

Fig. 1 zeigt eine Aufzuganlage mit einer Wartungsschalttafel gemäß einer Ausführungsform der vorliegenden Erfindung.

Fig. 2 zeigt eine Aufzugsteuerung gemäß einer Ausführungsform der vorliegenden Erfindung.

Die Figuren sind lediglich schematisch und nicht maßstabsgetreu. Gleiche Bezugszeichen bezeichnen in den verschiedenen Figuren gleiche oder gleichwirkende Merkmale

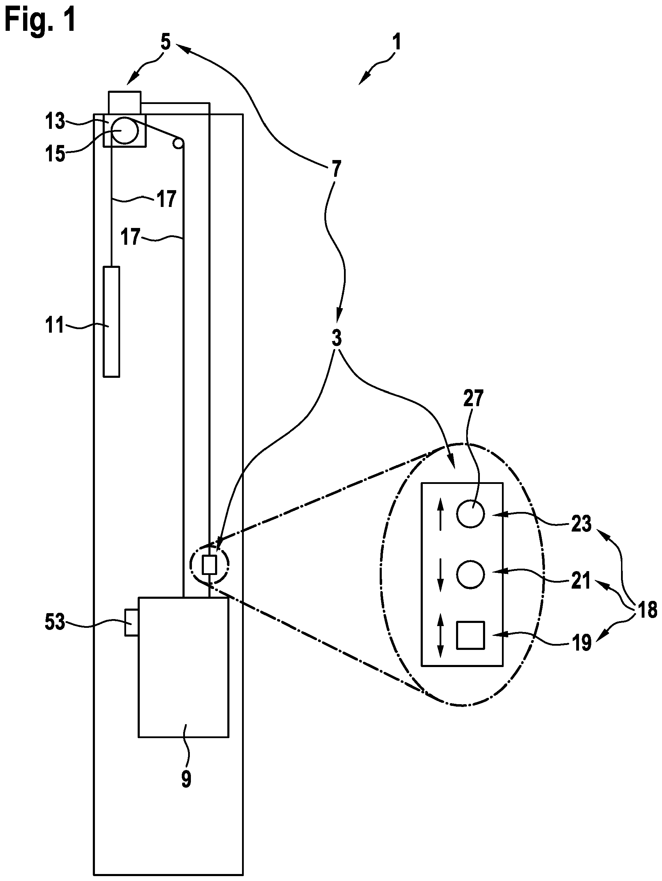

Fig. 1 zeigt eine Aufzuganlage 1 gemäß einer Ausführungsform der vorliegenden Erfindung. In der Aufzuganlage 1 können eine Aufzugkabine 9 und ein Gegengewicht 11, welche über gemeinsame Tragmittel 17 beispielsweise in Form von mehreren Gurten miteinander verbunden sind, mithilfe einer von einem Antriebsmotor 13 angetriebenen Treibscheibe 15 verlagert werden. Eine Leistungsversorgung zu dem Antriebsmotor 13 wird durch eine Steuereinheit 5 gesteuert.

Wenn die Aufzuganlage 1 gewartet werden soll und hierzu in einen Wartungsmodus versetzt wird, soll die Aufzugkabine 9 von einem sich außerhalb der Aufzugkabine 9 befindlichen Techniker, der beispielsweise auf einem Dach der Aufzugkabine 9 steht, verlagert werden können. Hierzu ist an der entsprechenden Stelle eine Wartungsschalttafel 3 vorgesehen. Die Wartungsschalttafel 3 kann mit der Steuerungseinheit 5 kommunizieren und mit dieser zusammen eine Aufzugsteuerung 7 bilden, die insbesondere während des Wartungsmodus zum Steuern von Verfahrvorgängen der Aufzuganlage 1 eingesetzt werden kann.

An der Wartungsschalttafel 3 sind drei Taster 18 in Form eines Freigabetasters 19, eines Abwärtsrichtungtasters 21 und eines Aufwärtsrichtungtasters 23 vorgesehen. Jeder der Taster 18 kann durch Niederdrücken eines Betätigungselements 27 temporär betätigt werden und federt anschließend selbsttätig in einen unbetätigten Zustand zurück.

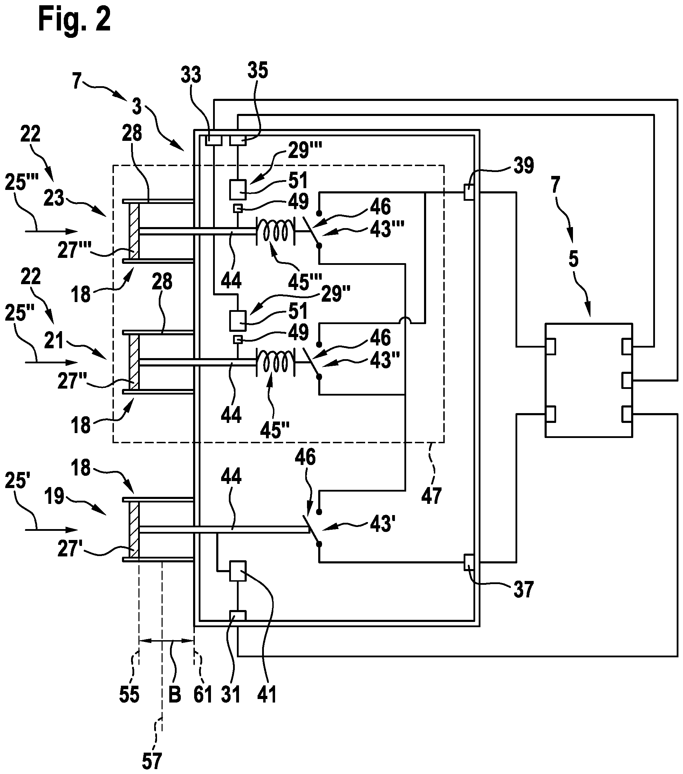

In Fig. 2 ist eine Detailansicht einer Ausführungsform der Aufzugsteuerung 7 mit der Wartungsschalttafel 3 und der Steuereinheit 5 schematisch wiedergegeben. Jeder der Taster 18 verfügt dabei über ein Betätigungselement 27, welches in einer Betätigungsrichtung 25 verlagert werden kann (wobei nachfolgend Komponenten des Freigabetasters 19 mit einem Apostroph ('), Komponenten des Abwärtsrichtungtasters 21 mit zwei Apostrophs (") und Komponenten des Aufwärtsrichtungtasters 23 mit drei Apostrophs (‴) bezeichnet sind).

Das Betätigungselement 27 kann dabei ausgehend von einer Ruheposition 55 entlang eines Betätigungsweges B über eine Betätigungsposition 57 bis hin zu einer Maximalverlagerungsposition 61 bewegt werden. Wenn das Betätigungselement 27 dabei über die Betätigungsposition 57 hinaus verlagert wird, geht der jeweilige Taster 18 von seinem unbetätigten Zustand in einen betätigten Zustand über. Dies kann beispielsweise dadurch geschehen, dass ein mechanischer oder elektronischer Schalter, der nachfolgend als Sicherheitskettenschalter 43 bezeichnet wird, geöffnet bzw. geschlossen wird. Dabei wird ein den Betätigungszustand wiedergebendes Betätigungssignal erzeugt.

Das Betätigungselement 27 kann dabei mit einem zu betätigenden Teil 46 des Sicherheitskettenschalters 43 starr gekoppelt sein, beispielsweise über eine zwischen diesen Komponenten verlaufende Stange 44, sodass die Bewegung des Betätigungselements 27 direkt auf den zu betätigenden Teil 46 des Sicherheitskettenschalters 43 übertragen wird. Im dargestellten Beispiel ist eine solche starre Kopplung für den Freigabetaster 19 dargestellt.

Alternativ kann das Betätigungselement 27 mit dem zu betätigenden Teil 46 des Sicherheitskettenschalters 43 beispielsweise über ein Federelement 45 gekoppelt sein. In diesem Fall kann beispielsweise das Betätigungselement 27 bis zu der Betätigungsposition 57 bewegt werden und dabei den zu betätigenden Teil 46 des Sicherheitskettenschalters 43 bis in einen betätigten Zustand (d.h. im dargestellten Beispiel bis in den geschlossenen Zustand) bewegen. Anschließend kann das Betätigungselement 27 noch weiter hin zu der Maximalverlagerungsposition 61 verlagert werden, wobei lediglich das Federelement 45 deformiert wird, aber der zu betätigende Teil 46 des Sicherheitskettenschalters 43 nicht weiter bewegt wird und sich somit der Schaltzustand des Sicherheitskettenschalters 43 nicht ändert.

Zumindest an einem der Taster 18 ist ein Positionssensor 29 vorgesehen. Im dargestellten Beispiel sind jeweils an dem Abwärtsrichtungtaster 21 und an dem Aufwärtsrichtungtaster 23 Positionssensoren 29", 29‴ vorgesehen. Diese Positionssensoren 29", 29‴ sind dazu ausgelegt, eine aktuelle Position des ihnen jeweils zugeordneten Betätigungselements 27", 27‴ des jeweiligen Tasters 18 zu detektieren und daraufhin ein mit der detektierten Position korrelierendes Positionssignal auszugeben.

Im dargestellten Beispiel sind die Positionssensoren 29 als Hallsensoren 51 ausgebildet. An den Tastern 18 sind jeweils Magnetelemente 49 vorgesehen. Die Magnetelemente 49 sind dabei vorzugsweise starr mit dem jeweiligen Betätigungselement 27 gekoppelt, sodass bei Verlagern des Betätigungselements 27 das jeweilige Magnetelement 49 in entsprechender Weise verlagert wird. Mit einer solchen Verlagerung des Magnetelements 49 und der damit einhergehenden Änderung der Relativposition zwischen dem Magnetelement 49 und dem jeweiligen Hallsensor 51 geht eine Änderung eines von dem Magnetelement 49 im Bereich des Hallsensors 51 generierten Magnetfeldes einher. Durch Messen einer solchen Änderung des Magnetfeldes kann der Hallsensor 51 das Positionssignal erzeugen, das mit der Position des Betätigungselements 27 korreliert.

Es sind jedoch auch andere Ausgestaltungen eines Positionssensors 29 einsetzbar. Beispielsweise kann die Position des Betätigungselements 27 mechanisch, optisch, kapazitiv, induktiv oder in anderer Weise detektiert werden.

An der Wartungsschalttafel 3 sind drei Signalausgänge 31, 33, 35 vorgesehen. Im dargestellten Beispiel ist ein dritter Signalausgang 35 mit dem Positionssensor 29‴ des Aufwärtsrichtungtasters 23 verbunden und ein zweiter Signalausgang 33 ist mit dem Positionssensor 29" des Abwärtsrichtungtasters 21 verbunden. Ein erster Signalausgang 31 ist mit einem Druckschalter 41 verbunden, der bei Betätigen des Betätigungselements 27' des Freigabetasters 19 betätigt wird.

Dementsprechend kann an jedem der drei Signalausgänge 31, 33, 35 das an dem zugeordneten Taster 18 detektierte Positionssignal und/oder das an den zugeordneten Taster 18 generierte Betätigungssignal ausgegeben werden. Das Positionssignal kann dabei von einem der Positionssensoren 29 erzeugt werden. Das Betätigungssignal kann von einem anderen Sensor, beispielsweise dem Druckschalter 41 erzeugt werden. Alternativ kann das Betätigungssignal auch durch ein Analysieren eines von einem der Positionssensoren 29 erzeugten Positionssignals abgeleitet werden. Als weitere Alternative kann das Betätigungssignal auch durch ein Analysieren des an dem zugeordneten Sicherheitskettenschalter 43 vorherrschenden Schaltzustands abgeleitet werden.

Die drei Signalausgänge 31, 33, 35 der Wartungsschalttafel 3 sind mit der Steuereinheit 5 verbunden. Dementsprechend können die Betätigungssignale und Positionssignale an die Steuereinheit 5 übermittelt werden. Alternativ zu einer Datenübermittlung über festverdrahtete Verbindungen kann eine drahtlose Signalübermittlung vorstellbar sein. Anhand der Betätigungssignale und Positionssignale kann die Steuereinheit 5 dann eine Leistungsversorgung zu dem Antriebsmotor 13 der Aufzuganlage 1 sowie gegebenenfalls eine Bremse 53 an der Aufzugkabine 9 steuern. Insbesondere kann, wie weiter unten beispielhaft beschrieben, eine Verfahrgeschwindigkeit, mit der die Aufzugkabine 9 verlagert werden soll, unter Berücksichtigung der von der Wartungsschalttafel 3 übermittelten Positionssignale gesteuert werden.

An der Wartungsschalttafel 3 sind ferner ein Sicherheitskettensignaleingang 37 und ein Sicherheitskettensignalausgang 39 vorgesehen. Über den Sicherheitskettensignaleingang 37 und den Sicherheitskettensignalausgang 39 ist die Wartungsschalttafel 3 ebenfalls mit der Steuereinheit 5 verbunden, sodass die Steuereinheit 5 einen sicherheitsrelevanten Zustand der Wartungsschalttafel 3 als Teil einer Sicherheitskette überwachen kann.

Innerhalb der Wartungsschalttafel 3 sind hierbei der Abwärtsrichtungtaster 21 und der Aufwärtsrichtungtaster 23 mit ihren jeweiligen Sicherheitskettenschaltern 43", 43‴ parallel miteinander verschaltet und können als in einer Richtungstastereinheit 47 zusammengefasst angesehen werden. Die Richtungstastereinheit 47 ist mit dem Freigabetaster 19 und dessen Sicherheitskettenschalter 43' in Serie geschaltet.

Durch diese Serienschaltung kann von der Steuereinheit 5 über den Sicherheitskettensignaleingang 37 und den Sicherheitskettensignalausgang 39 erkannt werden, ob der Freigabetaster 19 und/oder sowohl der Abwärtsrichtungtaster 21 als auch der Aufwärtsrichtungtaster 23 beide gleichzeitig geöffnet sind und somit die Serienschaltung innerhalb der Wartungsschalttafel 3 unterbrochen ist. In diesem Fall einer Unterbrechung der Sicherheitskette kann die Steuereinheit 5 eine Leistungsversorgung zu dem Antriebsmotor 13 der Aufzuganlage 1 unterbrechen und/oder eine an der Aufzugkabine 9 vorgesehene Bremse 53 aktivieren. Nur wenn sowohl der Freigabetaster 19 als auch zumindest einer der Richtungstaster 22 in der Richtungstastereinheit 47 gleichzeitig betätigt sind, ist die Serienschaltung in der Sicherheitskette geschlossen und die Steuereinheit 5 kann eine Leistungsversorgung zu dem Antriebsmotor 13 einrichten und/oder die Bremse 53 lösen.

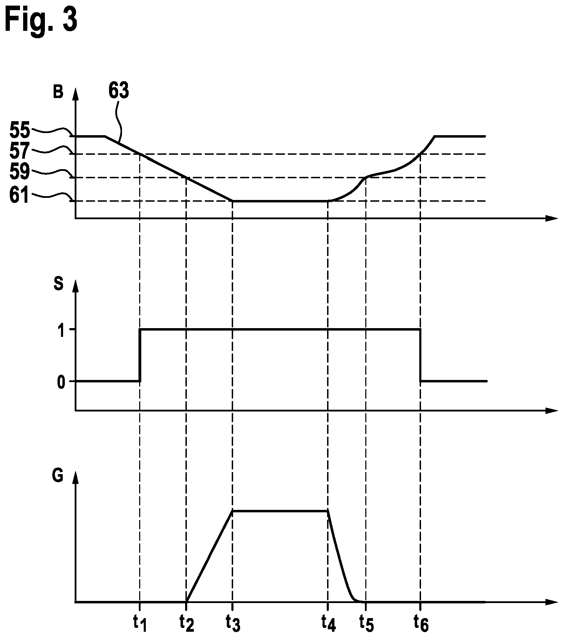

Nachfolgend wird mit Bezug auf Fig. 3 beispielhaft beschrieben, wie ein Techniker während einer Wartung mithilfe der Wartungstafel 3 einen Verfahrvorgang der Aufzuganlage 1 steuern kann. Fig. 3 veranschaulicht dabei, wie sich ein Positionssignal 63 verändert, wenn das Betätigungselement 27 eines mit einem Positionssensor 29 ausgestatteten Tasters 18 entlang eines Betätigungsweges "B" von der Ruheposition 55 über die Betätigungsposition 57 und eine Aktivierungsschwellenposition 59 bis hin zur Maximalverlagerungsposition 61 betätigt und anschließend wieder bis hin zur Ruheposition 55 gelöst wird. Fig. 3 veranschaulicht außerdem, wie sich ein Schaltzustand "S" einer Sicherheitskette zwischen dem Sicherheitskettensignaleingang 37 und dem Sicherheitskettensignalausgang 39 in Abhängigkeit von dem variierenden Positionssignal 63 zwischen einem offenen Zustand "0" und einem geschlossenen Zustand "1" verändert. Außerdem gibt Fig. 3 wieder, wie sich die Geschwindigkeit "G" der Aufzugkabine 9, während die Aufzugkabine 9 unter Berücksichtigung des Positionssignals 63 von der Steuereinheit 5 gesteuert verfahren wird, verändert.

Anfangs wird das Betätigungselement 27 des Tasters 18 von der Ruheposition 55 bis hin zu der Betätigungsposition 57 verlagert. Hierbei ändert sich weder der Schaltzustand S der Sicherheitskette, d.h. S = 0, noch die Geschwindigkeit G der Aufzugkabine, d.h. G = 0. Erst wenn das Betätigungselement 27 um Zeitpunkt t₁ über die Betätigungsposition 57 hinaus verlagert wird, wird, sofern gleichzeitig der Freigabetaster 19 gedrückt ist, die Sicherheitskette geschlossen, d.h. S = 1. Allerdings wird zu diesem Zeitpunkt eine Leistungsversorgung zu dem Antriebsmotor 13 noch nicht aktiviert, d.h. G = 0. Erst wenn das Betätigungselement 27 weiter in Richtung der Maximalverlagerungsposition 61 gedrückt wird und die Aktivierungsschwellenposition 59 zu einem Zeitpunkt t₂ erreicht, erkennt dies die Steuereinheit 5 aufgrund des entsprechend detektierten Positionssignals 63 und beginnt, den Antriebsmotor 13 mit elektrischer Leistung zu versorgen und somit die Aufzugkabine 9 in Bewegung zu versetzen, d.h. G > 0. Je weiter dabei das Betätigungselement 27 in Richtung der Maximalverlagerungsposition 61 gedrückt wird, umso schneller wird die Aufzugkabine 9 verfahren, bis zum Zeitpunkt t₃ eine gewünschte maximale Geschwindigkeit G » 0 erreicht ist.

Um die Aufzugkabine 9 wieder zu bremsen und letztendlich zu stoppen, lässt der Techniker sukzessive den Druck auf das Betätigungselement 27 ab einem Zeitpunkt t₄ wieder nach. Dies kann gezielt und sanft geschehen, sodass nahe einem Zeitpunkt ts, wenn die Aufzugkabine bereits sehr langsam geworden ist, da sich das Betätigungselement 27 der Aktivierungsschwellenposition 59 nähert, das Betätigungselement 27 nur noch langsam hin zur Aktivierungsschwellenposition 59 entspannt wird. Ein ruckhaftes Stoppen der Aufzugkabine 9 kann dadurch verhindert werden und die Aufzugkabine 9 kann sanft zum Stehen kommen, d.h. G = 0. Insbesondere wird zu diesem Zeitpunkt t₅ eine Leistungsversorgung zu dem Antriebsmotor 13 noch nicht unterbrochen und auch die Bremse 53 an der Aufzugkabine 9 wird noch nicht aktiviert. Dies geschieht erst, wenn zu einem Zeitpunkt t₆ das Betätigungselement 27 die Betätigungsposition 57 erreicht und weiter hin zur Ruheposition 55 verlagert wird, da in diesem Fall die Sicherheitskette wieder geöffnet wird, d.h. S = 0.

Zusammenfassend und mit anderer Wortwahl wird gemäß Ausführungsformen der vorliegenden Erfindung vorgeschlagen, einen zusätzlichen Schalter in Form eines Positionssensors in der Wartungsschalttafel vorzusehen. Dieser zusätzliche Schalter kann parallel zu den Richtungstastern verdrahtet sein und drucksensitiv arbeiten. Je stärker ein Anwender den Richtungstaster niederdrückt, desto höher wird das von diesem erzeugte Positionssignal. Gemäß diesem Positionssignal passt die Steuereinheit die Inspektionsgeschwindigkeit der Aufzugkabine an. Je mehr der Anwender den Richtungstaster drückt, desto schneller bewegt sich die Aufzugkabine. Auf diese Weise kann der Techniker die Kabinengeschwindigkeit direkt und in einer sehr intuitiven Weise und insbesondere ohne Unterbrechungen steuern. Es ist daher möglich, die Kabine schnell und sicher zu einer gewünschten Position zu verfahren. Insbesondere ist es aufgrund des von dem Positionssensor gelieferten Positionssignals betreffend die Richtungstaster möglich, die Aufzugkabine zu stoppen, bevor die Sicherheitskette öffnet. Dadurch kann ein ruckartiges Stoppen oder sogar Springen der Aufzugkabine vermieden werden.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### B ezugszeichenliste

- 1: Aufzuganlage
- 3: Wartungsschalttafel
- 5: Steuerungseinheit
- 7: Aufzugsteuerung
- 9: Aufzugkabine
- 11: Gegengewicht
- 13: Antriebsmotor
- 15: Treibscheibe
- 17: Tragmittel
- 18: Taster
- 19: Freigabetaster
- 21: Abwärtsrichtungtaster
- 22: Richtungstaster
- 23: Aufwärtsrichtungtaster
- 25: Betätigungsrichtung
- 27: Betätigungselement
- 28: Rahmen
- 29: Positionssensor
- 31: erster Signalausgang
- 33: zweiter Signalausgang
- 35: dritter Signalausgang
- 37: Sicherheitskettensignaleingang
- 39: Sicherheitskettensignalausgang
- 41: Druckschalter
- 43: Sicherheitskettenschalter
- 44: Stange
- 45: Federelement
- 46: zu betätigender Teil des Sicherheitskettenschalters
- 47: Richtungstastereinheit
- 49: Magnetelement
- 51: Hallsensor
- 53: Bremse
- 55: Ruheposition
- 57: Betätigungsposition
- 59: Aktivierungsschwellenposition
- 61: Maximalverlagerungsposition
- 63: Positionssignal

## Patentansprüche

1. Wartungsschalttafel (3) zum Steuern von Verlagerungsbewegungen einer Aufzugkabine (9), wobei die Wartungsschalttafel (3) aufweist:
zumindest drei Taster (18) umfassend einen Freigabetaster (19), einen Abwärtsrichtungstaster (21) und einen Aufwärtsrichtungstaster (23);
wobei jeder der Taster (18) jeweils ein in einer Betätigungsrichtung (25) verlagerbares Betätigungselement (27) aufweist und bei einem Verlagern des Betätigungselements (27) über eine jeweilige Betätigungsposition hinaus von einem unbetätigten in einen betätigten Betätigungszustand übergeht und ein mit dem jeweiligen Betätigungszustand korrelierendes Betätigungssignal ausgibt;
**dadurch gekennzeichnet, dass**
an zumindest einem der Taster (18) ein den jeweiligen Taster (18) überwachender Positionssensor (29) vorgesehen ist, der dazu konfiguriert ist, eine aktuelle Position des Betätigungselements (27) des jeweiligen Tasters (18) zu detektieren und ein mit der detektierten Position korrelierendes Positionssignal auszugeben.

2. Wartungsschalttafel nach Anspruch 1, ferner aufweisend:
einen ersten Signalausgang (31) zum Ausgeben des mit dem Betätigungszustand des Freigabetasters (19) korrelierenden Betätigungssignals und/oder des mit der aktuellen Position des Betätigungselements (27') des Freigabetasters (19) korrelierenden Positionssignals;
einen zweiten Signalausgang (33) zum Ausgeben des mit dem Betätigungszustand des Abwärtsrichtungstasters (21) korrelierenden Betätigungssignals und/oder des mit der aktuellen Position des Betätigungselements (27") des Abwärtsrichtungstasters (33) korrelierenden Positionssignals; und
einen dritten Signalausgang (35) zum Ausgeben des mit dem Betätigungszustand des Aufwärtsrichtungstasters (23) korrelierenden Betätigungssignals und/oder des mit der aktuellen Position des Betätigungselements (27‴) des Aufwärtsrichtungstasters (23) korrelierenden Positionssignals.

3. Wartungsschalttafel nach einem der vorangehenden Ansprüche, ferner aufweisend:
einen Sicherheitskettensignaleingang (37) und einen Sicherheitskettensignalausgang (39), wobei der Abwärtsrichtungstaster (21) und der Aufwärtsrichtungstaster (23) in einer Richtungstastereinheit (47) parallel miteinander verschaltet sind und die Richtungstastereinheit (47) und der Freigabetaster (19) zwischen dem Sicherheitskettensignaleingang (37) und dem Sicherheitskettensignalausgang (39) in Serie verschaltet sind.

4. Wartungsschalttafel nach einem der vorangehenden Ansprüche,
wobei jeweils an dem Abwärtsrichtungstaster (21) und dem Aufwärtsrichtungstaster (23) ein Positionssensor (29) vorgesehen ist.

5. Wartungsschalttafel nach einem der vorangehenden Ansprüche,
wobei der Positionssensor (29) dazu konfiguriert ist, zumindest eine aktuelle Position des Betätigungselements (27) des jeweiligen Tasters (18) zu detektieren, wenn dieses Betätigungselement (27) ausgehend von einer Ruheposition über die Betätigungsposition hinaus betätigt ist.

6. Wartungsschalttafel nach einem der vorangehenden Ansprüche,
wobei der Positionssensor (29) dazu konfiguriert ist, die aktuelle Position des Betätigungselements (27) des jeweiligen Tasters (18) berührungslos zu detektieren.

7. Wartungsschalttafel nach einem der vorangehenden Ansprüche,
wobei der von dem Positionssensor (29) zu überwachende Taster (18) ein Magnetelement (49) aufweist, welches mit dem Betätigungselement (27) derart mechanisch gekoppelt ist, dass es mit der Verlagerung des Betätigungselements (27) bewegt wird, und wobei der Positionssensor (29) einen Hallsensor (51) aufweist, um das Betätigungssignal abhängig von einer Relativposition zwischen dem Magnetelement (49) und dem Hallsensor (51) auszugeben.

8. Aufzugsteuerung (7) zum Steuern von Verlagerungsbewegungen einer Aufzugskabine (9) einer Aufzugsanlage (1), aufweisend:
eine Steuerungseinheit (5) zum Steuern einer Leistungsversorgung zu einem die Aufzugskabine (9) antreibenden Antriebsmotor (13);
eine Wartungsschalttafel (3) nach einem der vorangehenden Ansprüche.

9. Aufzugsteuerung nach Anspruch 8,
wobei die Steuerungseinheit (5) mit der Wartungsschalttafel (3) über einen an der Wartungsschalttafel (3) vorgesehenen Sicherheitskettensignaleingang (37) und einen an der Wartungsschalttafel (3) vorgesehenen Sicherheitskettensignalausgang (39) elektrisch verbunden ist, um einen aktuellen Schaltzustand der Wartungsschalttafel (3) zu überwachen und die Leistungsversorgung zu dem Antriebsmotor (13) zu unterbrechen, wenn der Freigabetaster (19) im unbetätigten Zustand ist oder der Aufwärtsrichtungstaster (21) und der Abwärtsbewegungstaster (23) beide im unbetätigten Zustand sind;
wobei die Steuerungseinheit (5) mit der Wartungsschalttafel (3) über einen an der Wartungsschalttafel (3) vorgesehenen ersten, zweiten und dritten Signaleingang (31, 33, 35) elektrisch verbunden ist, um die mit aktuellen Betätigungszuständen des Freigabetasters (19), des Aufwärtsrichtungstasters (21) und des Abwärtsrichtungstasters (23) korrelierenden Betätigungssignale und das mit der detektierten Position korrelierende Positionssignal der Wartungsschalttafel (3) zu überwachen und die Leistungsversorgung zu dem Antriebsmotor (13) einzurichten, wenn der Freigabetaster (19) im betätigten Betätigungszustand ist sowie einer des Aufwärtsbewegungstasters (21) und des Abwärtsrichtungstasters (23) im betätigten Betätigungszustand ist und dabei eine Stärke der Leistungsversorgung abhängig von dem Positionssignal zu steuern.

10. Aufzugsteuerung nach Anspruch 9,
wobei die Steuerungseinheit (5) ferner dazu konfiguriert ist, eine Bremse (53) an der Aufzugskabine (9) zu steuern;
wobei die Steuerungseinheit (5) mit der Wartungsschalttafel (3) über den Sicherheitskettensignaleingang (37) und den Sicherheitskettensignalausgang (39) elektrisch verbunden ist, um einen aktuellen Schaltzustand der Wartungsschalttafel (3) zu überwachen und die Bremse (53) an der Aufzugkabine (9) zu aktivieren, wenn der Freigabetaster (19) im unbetätigten Zustand ist oder der Aufwärtsrichtungstaster (21) und der Abwärtsrichtungstaster (23) beide im unbetätigten Zustand sind.

11. Aufzugsteuerung nach Anspruch 10,
wobei entlang eines Betätigungsweges (B) eines mit einem Positionssensor (29) ausgestatteten Tasters (18) eine Aktivierungsschwellenposition (59) zwischen der Betätigungsposition (57) und einer Maximalverlagerungsposition (55) angeordnet ist, und
wobei die Steuereinheit (5) dazu konfiguriert ist, die Leistungsversorgung zu dem Antriebsmotor (13) frühestens einzurichten, wenn das Positionssignal (63) des mit dem Positionssensor (29) ausgestatteten Tasters (18) angibt, dass das Betätigungselement (27) des Tasters (18) von der Ruheposition (55) kommend über die Aktivierungsschwellenposition (59) hinaus verlagert wurde.

12. Aufzugsteuerung nach einem der Ansprüche 10 und 11,
wobei entlang eines Betätigungsweges (B) eines mit einem Positionssensor (29) ausgestatteten Tasters (18) eine Aktivierungsschwellenposition (59) zwischen der Betätigungsposition (57) und einer Maximalverlagerungsposition (61) angeordnet ist, und
wobei die Steuereinheit (5) dazu konfiguriert ist, die Bremse (53) an der Aufzugskabine (9) frühestens zu aktivieren, wenn das Positionssignal (63) des mit dem Positionssensor (29) ausgestatteten Tasters (18) angibt, dass das Betätigungselement (27) des Tasters (18) von der Maximalverlagerungsposition (61) zurückkommend über die Aktivierungsschwellenposition (59) hinaus verlagert wurde.

13. Aufzugsanlage
(1) mit einer Aufzugsteuerung (7) gemäß einem der Ansprüche 8 bis 12.

## Claims

1. Maintenance control panel (3) for controlling displacement movements of an elevator car (9), the maintenance control panel (3) comprising:
at least three buttons (18) comprising an activation button (19), a downward direction button (21) and an upward direction button (23);
each of the buttons (18) comprising an actuation element (27) which can be displaced in an actuation direction (25) and, when the actuation element (27) is displaced beyond a respective actuation position, changing from an unactuated to an actuated actuation state and outputting an actuation signal correlating with the respective actuation state;
**characterized in that**
at least one of the buttons (18) is provided with a position sensor (29) which monitors the respective button (18) and is configured to detect a current position of the actuation element (27) of the respective button (18) and output a position signal correlating with the detected position.

2. Maintenance control panel according to claim 1,
further comprising:
a first signal output (31) for outputting the actuation signal correlating with the actuation state of the activation button (19) and/or the position signal correlating with the current position of the actuation element (27') of the activation button (19);
a second signal output (33) for outputting the actuation signal correlating with the actuation state of the downward direction button (21) and/or the position signal correlating with the current position of the actuation element (27") of the downward direction button (33); and
a third signal output (35) for outputting the actuation signal correlating with the actuation state of the upward direction button (23) and/or the position signal correlating with the current position of the actuation element (27‴) of the upward direction button (23).

3. Maintenance control panel according to one of the preceding claims,
further comprising:
a safety chain signal input (37) and a safety chain signal output (39),
wherein the downward direction button (21) and the upward direction button (23) are connected in parallel in a direction button unit (47) and the direction button unit (47) and the activation button (19) are connected in series between the safety chain signal input (37) and the safety chain signal output (39).

4. Maintenance control panel according to one of the preceding claims,
wherein a position sensor (29) is provided on the downward direction button (21) and the upward direction button (23) in each case.

5. Maintenance control panel according to one of the preceding claims,
wherein the position sensor (29) is configured to detect at least a current position of the actuation element (27) of the respective button (18) when this actuation element (27) is actuated from a rest position beyond the actuation position.

6. Maintenance control panel according to one of the preceding claims,
wherein the position sensor (29) is configured to detect the current position of the actuation element (27) of the respective button (18) without contact.

7. Maintenance control panel according to one of the preceding claims,
wherein the button (18) to be monitored by the position sensor (29) comprises a magnetic element (49) which is mechanically coupled to the actuation element (27) in such a way that it is moved when the actuation element (27) is displaced, and wherein the position sensor (29) has a Hall sensor (51) in order to output the actuation signal as a function of a relative position between the magnetic element (49) and the Hall sensor (51).

8. Elevator control system (7) for controlling displacement movements of an elevator car (9) of an elevator system (1), comprising:
a control unit (5) for controlling a power supply to a drive motor (13) driving the elevator car (9);
a maintenance control panel (3) according to any one of the preceding claims.

9. Elevator control system according to claim 8,
wherein the control unit (5) is electrically connected to the maintenance control panel (3) via a safety chain signal input (37) provided on the maintenance control panel (3) and a safety chain signal output (39) provided on the maintenance control panel (3) in order to monitor a current switching state of the maintenance control panel (3) and to interrupt the power supply to the drive motor (13) when the activation button (19) is in the unactuated state or the upward direction button (21) and the downward direction button (23) are both in the unactuated state;
wherein the control unit (5) is electrically connected to the maintenance control panel (3) via a first, second and third signal input (31, 33, 35) provided on the maintenance control panel (3) in order to monitor the actuation signals correlating with current actuation states of the activation button (19), the upward direction button (21) and the downward direction button (23) and the position signal of the maintenance control panel (3) correlating with the detected position and to establish the power supply to the drive motor (13) when the activation button (19) is in the actuated actuation state and one of the upward direction button (21) and the downward direction button (23) is in the actuated actuation state and thereby control a strength of the power supply as a function of the position signal.

10. Elevator control system according to claim 9,
wherein the control unit (5) is further configured to control a brake (53) on the elevator car (9);
wherein the control unit (5) is electrically connected to the maintenance control panel (3) via the safety chain signal input (37) and the safety chain signal output (39) in order to monitor a current switching state of the maintenance control panel (3) and to activate the brake (53) on the elevator car (9) when the activation button (19) is in the unactuated state or the upward direction button (21) and the downward direction button (23) are both in the unactuated state.

11. Elevator control system according to claim 10,
wherein an activation threshold position (59) is arranged between the actuation position (57) and a maximum displacement position (55) along an activation path (B) of a button (18) equipped with a position sensor (29), and
wherein the control unit (5) is configured to establish the power supply to the drive motor (13) at the earliest when the position signal (63) of the button (18) equipped with the position sensor (29) indicates that the actuation element (27) of the button (18) coming from the rest position (55) was displaced beyond the activation threshold position (59).

12. Elevator control system according to one of claims 10 and 11,
wherein an activation threshold position (59) is arranged between the actuation position (57) and a maximum displacement position (61) along an activation path (B) of a button (18) equipped with a position sensor (29), and
wherein the control unit (5) is configured to activate the brake (53) on the elevator car (9) at the earliest when the position signal (63) of the button (18) equipped with the position sensor (29) indicates that the actuation element (27) of the button (18) coming back from the maximum displacement position (61) was displaced beyond the activation threshold position (59).

13. Elevator system (1) with an elevator control system (7) according to one of claims 8 to 12.

## Revendications

1. Panneau de commande de maintenance (3) permettant de commander les mouvements de déplacement d'une cabine d'ascenseur (9), dans lequel le panneau de commande de maintenance (3) présente :
au moins trois boutons (18) comprenant un bouton de libération (19), un bouton de direction vers le bas (21) et un bouton de direction vers le haut (23) ;
dans lequel chacun des boutons (18) présente respectivement un élément d'actionnement (27) pouvant se déplacer dans une direction d'actionnement (25) et, lors d'un déplacement de l'élément d'actionnement (27) au-delà d'une position d'actionnement respective, passe d'un état d'actionnement non actionné à un état d'actionnement actionné et émet un signal d'actionnement en corrélation avec l'état d'actionnement respectif ;
**caractérisé en ce que**
au niveau d'au moins l'un des boutons (18), un capteur de position (29) surveillant le bouton (18) respectif est prévu, lequel capteur de position est configuré pour détecter une position actuelle de l'élément d'actionnement (27) du bouton (18) respectif et pour émettre un signal de position en corrélation avec la position détectée.

2. Panneau de commande de maintenance selon la revendication 1,
présentant en outre :
une première sortie de signal (31) destinée à émettre le signal d'actionnement en corrélation avec l'état d'actionnement du bouton de libération (19) et/ou le signal de position en corrélation avec la position actuelle de l'élément d'actionnement (27') du bouton de libération (19) ;
une deuxième sortie de signal (33) destinée à émettre le signal d'actionnement en corrélation avec l'état d'actionnement du bouton de direction vers le bas (21) et/ou le signal de position en corrélation avec la position actuelle de l'élément d'actionnement (27") du bouton de direction vers le bas (33) ; et
une troisième sortie de signal (35) destinée à émettre le signal d'actionnement en corrélation avec l'état d'actionnement du bouton de direction vers le haut (23) et/ou le signal de position en corrélation avec la position actuelle de l'élément d'actionnement (27"') du bouton de direction vers le haut (23).

3. Panneau de commande de maintenance selon l'une des revendications précédentes,
présentant en outre :
une entrée de signal de chaîne de sécurité (37) et une sortie de signal de chaîne de sécurité (39), dans lequel le bouton de direction vers le bas (21) et le bouton de direction vers le haut (23) sont connectés en parallèle l'un à l'autre dans une unité de bouton de direction (47), et l'unité de bouton de direction (47) et le bouton de libération (19) sont connectés en série entre l'entrée de signal de chaîne de sécurité (37) et la sortie de signal de chaîne de sécurité (39).

4. Panneau de commande de maintenance selon l'une des revendications précédentes,
dans lequel un capteur de position (29) est prévu respectivement au niveau du bouton de direction vers le bas (21) et du bouton de direction vers le haut (23).

5. Panneau de commande de maintenance selon l'une des revendications précédentes, dans lequel le capteur de position (29) est configuré pour détecter au moins une position actuelle de l'élément d'actionnement (27) du bouton (18) respectif lorsque ledit élément d'actionnement (27) est actionné au-delà de la position d'actionnement à partir d'une position de repos.

6. Panneau de commande de maintenance selon l'une des revendications précédentes,
dans lequel le capteur de position (29) est configuré pour détecter sans contact la position actuelle de l'élément d'actionnement (27) du bouton (18) respectif.

7. Panneau de commande de maintenance selon l'une des revendications précédentes,
dans lequel le bouton (18) destiné à être surveillé par le capteur de position (29) présente un élément magnétique (49) qui est accouplé mécaniquement à l'élément d'actionnement (27) de manière à être déplacé conjointement avec le déplacement de l'élément d'actionnement (27), et dans lequel le capteur de position (29) présente un capteur à effet Hall (51) pour émettre le signal d'actionnement en fonction d'une position relative entre l'élément magnétique (49) et le capteur à effet Hall (51).

8. Commande d'ascenseur (7) permettant de commander les mouvements de déplacement d'une cabine d'ascenseur (9) d'une installation d'ascenseur (1), présentant :
une unité de commande (5) permettant de commander une alimentation électrique vers un moteur d'entraînement (13) entraînant la cabine d'ascenseur (9) ;
un panneau de commande de maintenance (3) selon l'une des revendications précédentes.

9. Commande d'ascenseur selon la revendication 8,
dans laquelle l'unité de commande (5) est connectée électriquement au panneau de commande de maintenance (3) par une entrée de signal de chaîne de sécurité (37) prévue au niveau du panneau de commande de maintenance (3) et une sortie de signal de chaîne de sécurité (39) prévue au niveau du panneau de commande de maintenance (3), afin de surveiller un état de commutation actuel du panneau de commande de maintenance (3) et de couper l'alimentation électrique vers le moteur d'entraînement (13) lorsque le bouton de libération (19) est dans l'état non actionné ou lorsque le bouton de direction vers le haut (21) et le bouton de direction vers le bas (23) se trouvent tous deux dans l'état non actionné ;
dans laquelle l'unité de commande (5) est connectée électriquement au panneau de commande de maintenance (3) par l'intermédiaire d'une première, d'une deuxième et d'une troisième entrées de signal (31, 33, 35) prévues au niveau du panneau de commande de maintenance (3) afin de surveiller les signaux d'actionnement en corrélation avec des états d'actionnement actuels du bouton de libération (19), du bouton de direction vers le haut (21) et du bouton de direction vers le bas (23), et le signal de position du panneau de commande de maintenance (3) en corrélation avec la position détectée, et d'établir l'alimentation électrique vers le moteur d'entraînement (13), lorsque le bouton de libération (19) se trouve dans l'état d'actionnement actionné et le bouton de direction vers le haut (21) et/ou le bouton de direction vers le bas (23) se trouve dans l'état d'actionnement actionné, et de commander ainsi une intensité de l'alimentation électrique en fonction du signal de position.

10. Commande d'ascenseur selon la revendication 9,
dans laquelle l'unité de commande (5) est en outre configurée pour commander un frein (53) au niveau de la cabine d'ascenseur (9) ;
dans laquelle l'unité de commande (5) est connectée électriquement au panneau de commande de maintenance (3) par l'intermédiaire de l'entrée de signal de chaîne de sécurité (37) et de la sortie de signal de chaîne de sécurité (39) afin de surveiller un état de commutation actuel du panneau de commande de maintenance (3) et d'activer le frein (53) au niveau de la cabine d'ascenseur (9) lorsque le bouton de libération (19) est dans l'état non actionné ou lorsque le bouton de direction vers le haut (21) et le bouton de direction vers le bas (23) sont tous deux dans l'état non actionné.

11. Commande d'ascenseur selon la revendication 10,
dans laquelle, le long d'un trajet d'actionnement (B) d'un bouton (18) équipé d'un capteur de position (29), une position de seuil d'activation (59) est disposée entre la position d'actionnement (57) et une position de déplacement maximal (55), et
dans laquelle l'unité de commande (5) est configurée pour établir l'alimentation électrique vers le moteur d'entraînement (13) au plus tôt lorsque le signal de position (63) du bouton (18) équipé du capteur de position (29) indique que l'élément d'actionnement (27) du bouton (18), venant de la position de repos (55), a été déplacé au-delà de la position de seuil d'activation (59).

12. Commande d'ascenseur selon l'une des revendications 10 et 11,
dans laquelle, le long d'un trajet d'actionnement (B) d'un bouton (18) équipé d'un capteur de position (29), une position de seuil d'activation (59) est disposée entre la position d'actionnement (57) et une position de déplacement maximal (61), et
dans laquelle l'unité de commande (5) est configurée pour activer le frein (53) au niveau de la cabine d'ascenseur (9) au plus tôt lorsque le signal de position (63) du bouton (18) équipé du capteur de position (29) indique que l'élément d'actionnement (27) du bouton (18), revenant de la position de déplacement maximal (61), a été déplacé au-delà de la position de seuil d'activation (59).

13. Installation d'ascenseur (1) comportant une commande d'ascenseur (7) selon l'une des revendications 8 à 12.
